# EUROPEAN PATENT SPECIFICATION

(11) **EP 4 179 875 B1**
(45) Date of publication and mention of the grant of the patent: **14.08.2024**
(21) Application number: 22172191.3
(22) Date of filing: 06.05.2022
(51) Int. Cl.: A22C 11/02

(54) **MAGAZINE AND REVOLVER TO PROVIDE PACKAGING CASING FOR PRODUCING SAUSAGE-SHAPED PRODUCTS**
MAGAZIN UND DREHSCHEIBE ZUM BEREITSTELLEN EINER VERPACKUNGSHÜLLE ZUM PRODUZIEREN VON WURSTFÖRMIGEN PRODUKTEN
CHARGEUR ET PLATEAU TOURNANT POUR FOURNIR UNE ENVELOPPE D'EMBALLAGE POUR LA PRODUCTION DE PRODUITS EN FORME DE SAUCISSES

(43) Date of publication of application: 17.05.2023
(73) Proprietor: Poly-clip System GmbH & Co. KG, 65795 Hattersheim (DE)
(72) Inventor: Meyrahn, Joachim, 64390 Erzhausen (DE); Münker, Udo, 63505 Langenselbold (DE); Babinsky, André, 51580 Reichshof (DE)
(74) Representative: Eisenführ Speiser

(56) References cited:
- US-A- 4 306 334
- US-A- 6 139 416

## Description

The present invention relates to a magazine for providing at least one tubular-shaped packaging casing suitable for receiving a flowable filling material in the production of sausage-shaped products, in particular sausages, and further to a revolver with multiple magazines and production machine for filling and closing a tubular-shaped packaging casing, in particular a clipping machine.

US 4 306 334 A discloses a star-shaped holder which carries carriers for artificial casings. In practice, it is known that, for example in the production of sausage-shaped products in particular sausages, filling material is fed by a filling unit trough a filling tube into a tubular or bag-shaped packaging casing. A filling unit or filling machine provides and conveys the filling material. The packaging casing can be stored on said filling tube and can be closed at its front end and its back end by at least one closure clip each as a closure means e.g., by a clipping machine and/or clipping device of a clipping machine. The tubular packaging casing is pulled-off from the filling tube while being filled by the feeding pressure.

The tubular-shaped packaging casing is made of a thin sheet material and is stored on the filling tube in a shirred form. Thus, a long sausage-shaped product can be produced, wherein the packaging casing takes up a little space on the filling tube. But the packaging casing has a limited length, so a new packaging casing must be provided at regular time intervals. Further, different packaging casings must be provided depending on the sausage-shaped product, wherein a coarse or thick sausage requires large packaging casings, and a delicate or thin sausage requires small packaging casings. It is known to provide a plurality of packaging casings in a storage nearby a production system for producing a sausage-shaped product, wherein an operator manually and very carefully picks up each packaging casing and pushes over the filling tube. The packaging casing is difficult to handle due to its mechanical properties and the way it is stored in the storage.

Since clipping machines can have high cycle rates, it may be necessary for an operator to be constantly in front of the clipping machine to push new packaging casings onto the filling tube. Despite the high level of automation of a filling/clipping machine combination, this approach does not help to make the production process efficient. In addition, the operator's activity is monotonous and is thus physically and mentally stressful.

Thus, it is an object of the present invention to create a possibility that the production process is efficient and the burden for an operator is reduced.

According to the present invention, there is provided an inventive magazine for supplying or providing at least one tubular-shaped packaging casing, wherein the magazine comprises a longitudinal magazine axis. The magazine further comprises at least one mandrel or rod for holding at least one packaging casing, wherein the at least one mandrel has a longitudinal mandrel axis, which extends at least approximately parallel to the longitudinal magazine axis, and wherein the at least one mandrel comprises a free end at a first mandrel end. The at least one mandrel or rod may be a tubular shaft or a solid bar. The at least one packaging casing may be removed from the at least one mandrel by a relative movement regarding the mandrel axis over the free end of the at least on mandrel. The tubular-shaped packaging casing is folded like a concertina and is provided at its end facing in the direction of the free end of the mandrel with at least one closure means, like a closure clip.

The magazine further comprises at least one retaining element at the proximity of the first mandrel end for releasably retaining the packaging casing on the at least one mandrel. Consequently, the at least one packaging casing remains in a suitable arrangement, so a secure and repeated removal is enabled.

Due to the consistent storage of the packaging casing, the process of removal can be automated, in particular with a picking robot. It is conceivable that, alternatively, the at least one mandrel is provided for holding at least one carrying tube along with at least one packaging casing stored on the carrying tube. In the further description, reference is made only to the tubular-shaped packaging casing, whereas the contents may also apply to the embodiment as to the carrying tubes each carrying one tubular-shaped packaging casing.

In the inventive magazine, the longitudinal magazine axis is oriented at least approximately vertically. The magazine may be arranged at the top of a table. Vertical means perpendicular to the hall floor on which the magazine or the table may be installed and/or in the direction of the earth's gravity. Thus, a packaging casing that is stored rests radially evenly on the mandrel. A horizontal arrangement can cause an irregular, one-sided arrangement of the packaging casing on the filling tube due to the earth's gravity, by which the packaging casing could be damaged or difficult to pick up.

Preferably, the at least one retaining element has at least one first section or position in which it releases the free end of the at least one mandrel and at least one second section or position in which the free end of the at least one mandrel is capped by the at least one retaining element. The at least one first section or position may be in extension of the mandrel axis at the free end of the at least one packaging casing and/or at least one mandrel. In the at least one first section or position the at least one retaining element may at least partially cover the free face end of the at least one packaging casing and/or the at least one mandrel, preferably half covered or covered by one third. Additionally or alternatively, the at least one first section or position may be at a circumference of the at least one packaging casing or the at least one mandrel. The at least one second section or position may be spaced apart from the first section or position along the mandrel axis.

Additionally or alternatively, the at least one second position may be perpendicularly spaced apart from the mandrel axis, wherein the second position has a smaller or larger distance or the same distance to the magazine axis as the first position. The movement of the at least one retaining element between the at least one first position and the at least one second position may be executed manually or automated. An operator may urge the at least one retaining element from the at least one first position in the at least one second position, and vice versa. It may be advantageous if the operator urges the at least one retaining element from the first position in the second position by removing the at least one packaging casing from the at least one mandrel.

It is conceivable that the removal of the packaging casing comes along with the movement of the at least one retaining element from the first position in the second position. The at least one retaining element may also be driven by a means of a motor, wherein the means of a motor moves the at least one retaining element between the retaining position and the releasing position. The at least one retaining element may be moved from the first position in the second position at the same time the packaging casing is picked up and begins to move.

The movement of the retaining element can also be caused by the movement of the magazine, for example when the magazine rotates about its longitudinal magazine axis and corresponding, preferably controllable, stops move the retaining element from the first position to the second position and after the pick-up of the tubular-shaped packaging casing from the second position to the first position as the magazine rotates.

In a further preferred embodiment, the at least one retaining element is made of a material which is elastic or flexible at least in sections, preferably the at least one retaining element comprises a rigid fastening portion and a flexible lip. Thus, the at least one retaining element may be reversibly movable between the first position and the second position.

The at least one retaining element may be configured in such a way, that the retaining element urges by its own in the first position and must be moved in the second position using external energy or vice versa.

The at least one retaining element may comprise a material that is suitable for a plurality of reversible deformations, like rubber or elastomers.

It is advantageous if the at least one retaining element comprises a retaining surface, wherein in the first position the retaining surface extends perpendicular to the mandrel axis and engages, preferably completely, with the free end of the at least one mandrel and/or an end face of the packaging casing. In the second position the retaining surface may further be perpendicular to the mandrel axis or may be curved around an axis perpendicular to the mandrel axis to release the at least one packaging casing. Alternatively, the at least one retaining element may be translationally moved perpendicular to the mandrel axis between the first position and the second position.

In a preferred embodiment the at least one mandrel has a second mandrel end spaced apart from the first mandrel end along the mandrel axis. The mandrel is releasably or non-releasably attached to mandrel carrier means at the second mandrel end.

The mandrel carrier means may comprise a first plate, wherein the first plate is preferably perpendicular to the magazine axis. The first plate may be circular and flat regarding to the magazine axis. A packaging casing may rest against the mandrel carrier means in the stored state. Thus, the packaging casing is stored at the mandrel securely and consistently.

Preferably, the mandrel carrier means is rotatable around the longitudinal magazine axis. Thus, an empty mandrel or a packaging casing can be suitably positioned in such a way, that an operator can easily store a new packaging casing at an empty mandrel or pick a packaging casing. The mandrel carrier means may comprise first driven means to rotate the mandrel carrier means, in particular the first plate.

The mandrel carrier means may further comprise first gear means to gear the first driven means. The first driven means and/or the first gear means may be arranged below the first plate. Due to the rotation of the mandrel carrier means different packaging casing may be positioned at a same picking position and/or a packaging casing to be picked may be positioned at different picking positions. Thus, packaging casing may be provided at the same picking position, so they can be picked easily, securely, and repeatedly.

It is conceivable that at least one first sensor is provided to detect if the at least one mandrel comprises at least one packaging casing. Thus, depending on the sensor signal of the first signal a suitable mandrel can be positioned in the picking position.

In a preferred embodiment the at least one retaining element is held by holding means coupled releasably or non-releasably by a shaft to the mandrel carrier means for supporting the holding means and transmitting forces from the mandrel carrier means to the holding means, in particular a rotation around the magazine axis. The holding means may be arranged above the mandrel carrier means and/or the shaft may be arranged between the mandrel carrier means and the holding means. The shaft may be tubular or solid and extend along the magazine axis. The holding means may comprise a second plate. The second plate may be circular and/or flat regarding the magazine axis and/or perpendicular to the magazine axis. The second plate may further be parallel to the first plate and spaced apart from the first plate along the magazine axis. The distance between the mandrel carrier means and the holding means may be adjustable, wherein, preferably, the shaft can be telescopic.

Additionally, the at least one mandrel may also be adjustable in the axial length according to the mandrel axis. Thus, packaging casing with different lengths may be stored in the magazine.

It is advantageous if the at least one retaining element is arranged at the outer circumference of the holding means. Thus, the holding means stand back and just the at least one retaining element is protruding perpendicular to the magazine axis to cap the packing casing stored on the at least one mandrel.

Preferably, the holding means comprise at least one tooth extending perpendicular to the magazine axis and the at least one retaining element is arranged at the at least one tooth.

It is advantageous if mandrel carrier means have an outer first diameter, and the holding means have an outer second diameter. The first diameter may be larger than the second diameter. Thus, the at least one mandrel may be arranged at the mandrel carrier means while packaging casing can be easily picked from and arranged at the at least one mandrel. The quotient between the first diameter and the second diameter may be in range between 10:1 and 1.2:1, in particular in a range between 5:1 and 1.5:1 and preferably about 2:1. Thus, a movement of a packaging casing along the mandrel axis over the free end of the at least one mandrel can be realized.

Preferably, the at least one mandrel is arranged at the mandrel carrier means along a shape of a circular ring, wherein the ring is arranged perpendicular to the magazine axis. Thus, the at least one mandrel has a constant distance to the magazine axis, and an easy handling of the packaging casing is possible even with a rotation of the magazine, in particular with a rotation of the mandrel carrier means.

It is advantageous if the circular ring has a ring diameter, wherein the first diameter is larger than the ring diameter and/or wherein the ring diameter is larger than the second diameter. The quotient between the first diameter and the ring diameter may be in range between 2:1 and 1.1:1, and preferably about 1.2:1. The quotient between the ring diameter and the second diameter may be in range between 8:1 and 1.3:1, in particular between 4:1 and 1.6:1 and preferably about 1.8:1.

In a preferred embodiment, the at least one mandrel comprises at least one support element for supporting the packaging casing stored at the at least one mandrel. The packaging casing may rest against the at least one support element due to earth's gravity. The at least one mandrel may comprise a mandrel rod. The at least one support element may be arranged at the mandrel rod. The at least one support element may be formed as a mandrel collar, wherein the mandrel collar has a larger cross-section than the mandrel rod regarding the mandrel axis.

The at least one support element is preferably reversibly adjustable in its position along the mandrel, in particular along the mandrel rod. Thus, packaging casings with different lengths may be stored in the magazine. To adjust the position of the at least one support element along the mandrel axis, the at least one mandrel may comprise a rack and a gear wheel engaging with the rack or a threaded spindle and a nut engaging with the threaded spindle.

The present invention further relates to a revolver comprising at least two magazines for providing at least one tubular or bag-shaped packaging casing suitable for receiving a flowable filling material in the production of sausage-shaped products, in particular sausages. The revolver comprises revolver carrier means, wherein the at least two magazines are arranged on the revolver carrier means. The revolver carrier means are rotatable around an axis of rotation extending at least approximately parallel to the longitudinal magazine axis. A rotation of the revolver carrier means causes a rotation of the at least two magazines. Thus, a higher flexibility of the magazines is enabled.

The revolver carrier means may comprise second driven means to rotate the mandrel carrier means, in particular the at least two magazines. The revolver carrier means may further comprise second gear means to gear the second driven means. If the revolver carrier means comprise a second driven means and/or a second gear means then the at least two magazines, in particular the mandrel carrier means, may not have a separate first driven means and/or second driven means. So, the second driven means and/or the second gear means may be suitable to rotate the revolver carrier means and the mandrel carrier means simultaneously and/or independently.

The revolver carrier means may comprise a third plate. The third plate may be circular and/or flat regarding the magazine axis and/or perpendicular to the magazine axis. The third plate may further be parallel to the first plate and/or the second plate. The third plate may be spaced apart from the first plate and/or the second plate along the magazine axis. The first plate may be arranged between the second plate and the third plate. The third plate has a third diameter, wherein the third diameter is greater than the first diameter and/or the second diameter and/or the ring diameter. The quotient between the third diameter and the first diameter may be in range between 10:1 and 1.2:1, in particular between 5:1 and 1.5:1 and preferably around 2.5:1. The quotient between the third diameter and the second diameter may be in range between 20:1 and 2:1, in particular between 15:1 and 3:1 and preferably around 4:1.

It is conceivable that at least one second sensor is provided to detect if the at least one mandrel comprises at least one packaging casing. Otherwise, the revolver carrier means can be rotated in such a way that a further equipped magazine is positioned in the workspace of the operator.

In a preferred embodiment, the revolver carrier means have at least a first position in which at least a first magazine is arranged in a delivery position and at least a second position in which at least a second magazine is arranged in a feeding position. In the first position, the operator or an automatic device for picking-up the packaging casing, like a robot, may pick up a packaging casing stored at the least one mandrel. In the second position, the operator may refill the at least one empty mandrel with new packaging casing.

It is advantageous if the revolver comprises at least one separating wall arranged between the first position and the second position. Thus, a first operator can work at the at least one first magazine and a second operator can work at the at least one second magazine, wherein the at least one separating wall provides an interfering between the first operator and the second operator. The first operator may be a robot and the second operator may be a human. In this case, a human-robot-collaboration may be possible, wherein the direct contact of both operators is prevented. This goes hand in hand with a high level of safety and high productivity. The separating wall may be formed by a solid wall that can be rotationally or translationally opened and closed by a human or a robot. Alternatively, the separating wall may be a flexible sheet that can be urged by the revolver, in particular by the rotated magazines.

The present invention further relates to a production machine, in particular a clipping machine, for filling and closing a tubular-shaped packaging casing to produce sausage-shaped products, in particular sausages. The production machine comprises at least one magazine and/or a revolver. The production machine comprises further a robot to pick-up a packaging casing provided at the magazine and/or at the revolver and to place it at a filling unit or filling machine.

The filling unit may comprise multiple filling tubes to receive multiple packaging casings, wherein an active filling tube is rotated in an active or operating position and wherein at least one passive filling tube is rotated in a passive or non-operating position. Preferably in the passive position, the filling tubes can be exchangeable by the operator and new tubular-shaped packaging casings can be pushed onto the one or more filling tubes located in their passive positions. To close the packaging casing filled with filling material by a closure means the production machine further comprises a clamping device. It is conceivable that one magazine or one revolver is used for multiple operators and/or clamping devices and/or production lines.

For a more complete understanding of the invention, the invention will now be described in detail with reference to the accompanying drawings. The detailed description will illustrate and describe what is considered as preferred embodiments of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" or "including" does not exclude other elements or steps. The word "a" or "an" does not exclude the plurality. The wording "at least one" items comprising also the number 1, i.e. a single item, and further numbers like 2, 3, 4 and so forth. The word "about" includes a deviation of ± 5% of the total.

In the accompanying drawings:
- Fig. 1: shows a front view of a clipping machine comprising a magazine according to the present invention;
- Fig. 2: shows a rear view of the clipping machine according to Fig. 1;
- Fig. 3: shows a top view of the clipping machine according to Fig. 1;
- Fig. 4a: shows a schematical side view of a mandrel and a retaining element of the magazine according to Fig. 1, wherein the retaining element is in a retaining position;
- Fig. 4b: shows a schematical side view of a mandrel and a retaining element of the magazine according to Fig. 1, wherein the retaining element is in a releasing position;
- Fig. 5: shows a side view of a clipping machine comprising a revolver according to the present invention; and
- Fig. 6: shows a top view of the clipping machine according to Fig. 5.

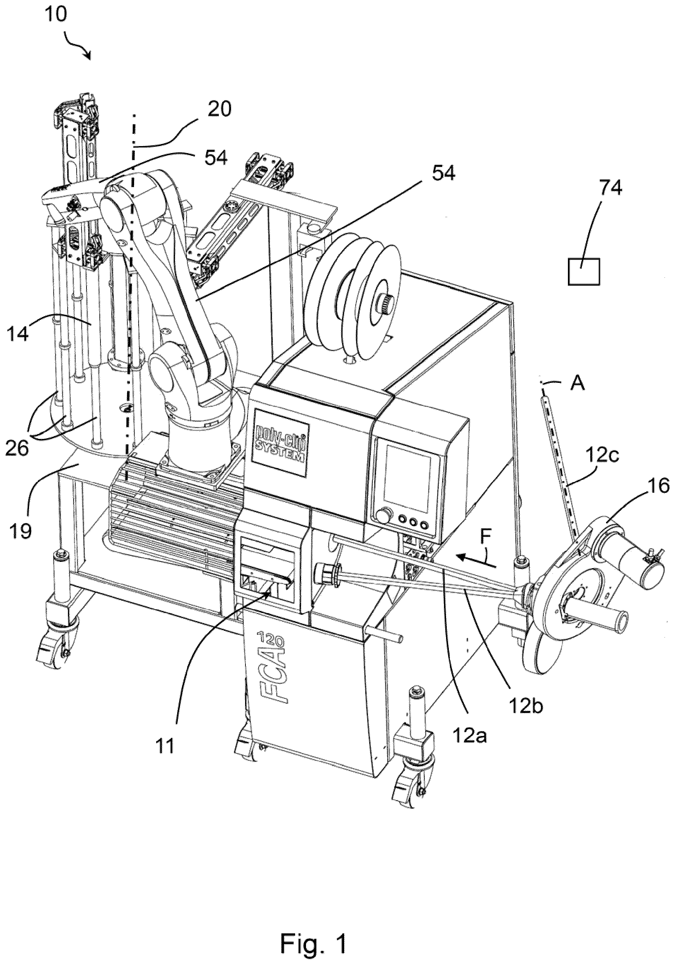

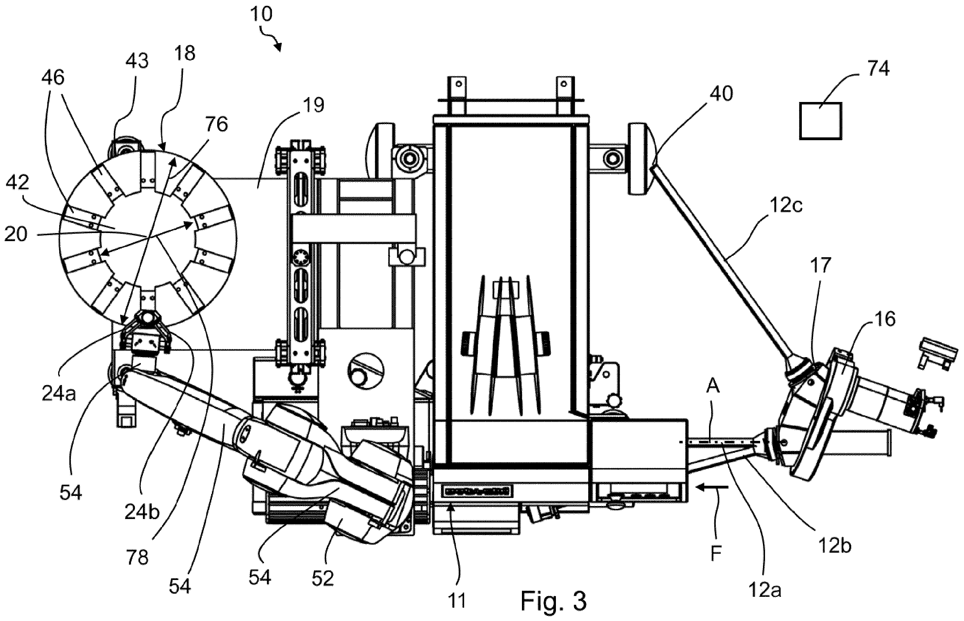

In Figs. 1 to 3, a first embodiment of a production machine, in particular a clipping machine 10 for preferably continuously producing sausage-shaped products, in particular sausages, is shown. A filling tube 12a is arranged upstream of clipping machine 10 with respect to a feeding direction F, wherein filling tube 12a extending along a central axis A and being made of a suitable material, like stainless steel.

Filling tube 12a arranged in an active or operating position which is a filling position, is attached to a filling tube assembly 16 which holds several filling tubes 12, in the shown embodiment in total two filling tubes 12a, 12c. In the embodiment shown in Fig. 1, filling tubes 12b, 12c are each in a passive position or non-working position, in which they can be loaded with new tubular-shaped packaging casings. It has to be noted that filling tube 12b represents the inactive position when filling tube 12a, being in the active or operating position, is pivoted outwardly, away from clipping machine 10, about a respective filling tube hinge. Loading new tubular-shaped packaging casing onto a filling tube 12 is particularly possible in the position represented by filling tube 12c in Fig. 1. In the position represented by filling tube 12b in Fig. 1, a casing brake assembly CB required for the production process can be pushed onto filling tube 12b. By means of filling tube assembly 16, filling tubes 12b, 12c can be moved by rotation of filling tube assembly 16 from their respective passive positions to the working position represented by filling tube 12a in Fig. 1.

Revolver filling tube assembly 16 is arranged directly or indirectly at an outlet of a filling unit (not shown) that feeds the filling material, wherein filling tube assembly 16 has two ports to connect each to one filling tube 12. Filling tube assembly 16 is configured in such a way, that filling tubes 12 may be positioned in an active position and a passive position by a rotation of filling tube assembly 16 around central axis A, wherein in the active position filling tube 12 is fluidically connected to the filling unit and in the passive position filling tube 12 is fluidically disconnected to the filling unit. In the passive position, filling tube 12 can be assembled and dissembled from filling tube assembly 16, and a packaging casing 14 may be arranged at filling tube 12. For cleaning reason and product changes different filling tubes 12 must be assembled at clipping machine 10. Further packaging casing 14 stored on the filling tube 12 is finitely, so in regular time periods new packaging casings 14 must be provided.

Clipping machine 10 comprises a magazine 18, wherein magazine 18 is arranged at a table 19 and has a longitudinal magazine axis 20 and has 10 slots for packaging casings 14. Magazine 18 is arranged in such a way, that longitudinal magazine axis 20 is vertical, especially parallel to earth's gravity direction. To change filling tube 12 at filling tube assembly 16 a gripping robot 22 is provided at clipping machine 10. Robot 22 may be arranged between clipping device 11 and magazine 18, as shown in Fig. 1. Alternatively, robot 22 may be arranged near filling tube assembly 16, in particular not in the front of clipping machine 10 but either in the back of clipping machine 10. Robot 22 comprises a gripper with a left blade 24a and a right blade 24b, wherein blades 24a, 24b can be moved together to grip packaging casing 14. Blades 24a, 24b may have a soft material or coating to protect packaging casing 14 of damage due to handling by robot 22. Blades 24a, 24b have substantially the same length as packaging casing 14, wherein in the gripped state blades 24a, 24b enclose packaging casing 14 circumferentially and longitudinally, preferably completely. Robot 22 may provide different blades 24a, 24b with different lengths or diameters to handle different packaging casings 14.

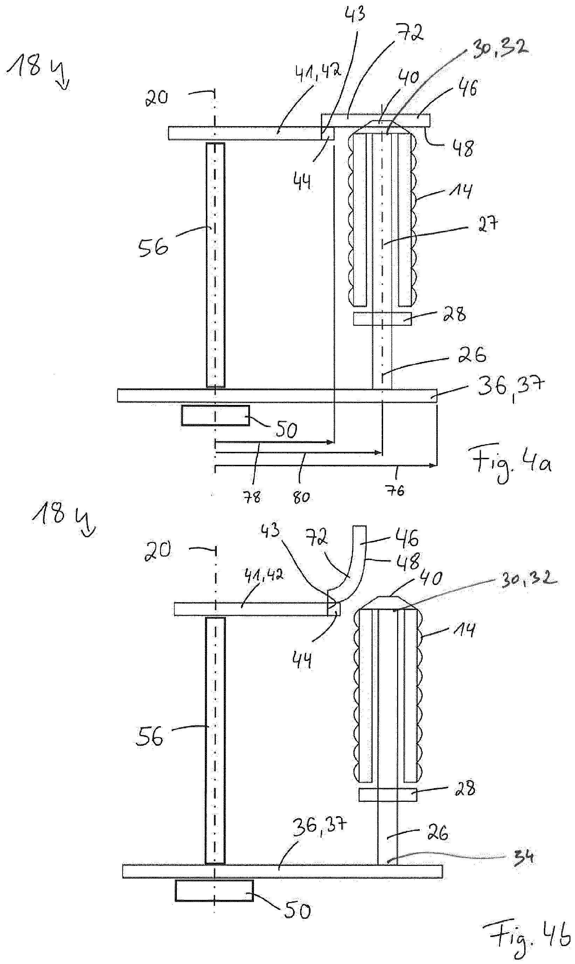

A tubular packaging casing 14 made of a thin sheet material is stored in a shirred form, like a concertina (cf. Figs. 4a, 4b), on filling tube 12a. The front end of packaging casing 14 facing in feeding direction F is closed by at least one closing means, such as a closure clip, by, for example, a clipping device 11. A feeding pump of a filling unit or filler (not shown) is feeding the filling material into packaging casing 14 while the feeding pressure of the filling material is pulling packaging casing 14 off from filling tube 12a. Gathering means of clipping unit 10 form a plait-like portion of filled packaging casing 14 which is at least approximately free from filling material. Clipping unit 10 then places and closes at least one closure clip at the plait-like portion forming the rear end of the sausage-shaped product just produced, i.e. the end pointing against the feeding direction F.

Robot 22 grasps a packaging casing 14 and moves it from magazine 18 to filling tube 12c, wherein packaging casing 14 is slid on filling tube 12c arranged at filling tube assembly 16. By rotating filling tube assembly 16, filling tube 12c can be brought from the passive position in the active position, the filling process can be continued with the packaging casing 14. It is advantageous if filling tube 12c is loaded with a new packaging casing 14 while filling tube 12a can be operated.

To store packaging casings 14 at magazine 18, magazine 18 comprises a plurality of mandrels 26, in the present case in particular ten mandrels 26, extending along a mandrel axis 27 parallel to magazine axis 20 each to receive one packaging casing 14. Mandrels 26 comprise a mandrel rod 29 and a support element 28, preferably formed as a mandrel collar, for supporting a packaging casing 14. Support element 28 is arranged at mandrel rod 29 and extending perpendicular to mandrel axis 27, wherein packaging casing 14 is resting against support element 28 due to earth's gravity. So, packaging casing 14 is arranged above support element 28 at mandrel 26. The support element 28 has a larger cross-section than the mandrel rod 29 for a secure resting of packaging casing 14. Support element 28 is reversibly radial and/or axial adjustable regarding mandrel axis 27. Thus, packaging casings 14 with different sizes may be stored in magazine 18.

Further, mandrels 26 each comprise a first end 30 with a free end 32 and a second end 34, wherein first end 30 and second end 34 are spaced apart along mandrel axis 27. Mandrels 26 are arranged releasably or non-releasably at their second end 34 at mandrel carrier means 36, in particular a first plate 37, wherein mandrels 26 are arranged at mandrel carrier means 36 along a circular ring that is perpendicular to magazine axis 27. In the shown embodiment, ten mandrels 26 are provided, which have an angular distance of about 36°.

To store one packaging casing 14 at one mandrel 26, mandrel 26 is positioned in such a way, that packaging casing 14 is arranged at free end 32 of mandrel 26 in extension of mandrel axis 27. Afterwards packaging casing 14 is slid over mandrel 26 by a relative movement of packaging casing 14 parallel to magazine axis 20.

Holding means 42, in particular a second plate, is provided near first end 30 of mandrel 26. Holding means 42 are spaced apart from mandrel carrier means 36 along magazine axis 20 and extend parallel to mandrel carrier means 36. At an outer circumference 43 of holding means 42, teeth 44 protruding perpendicular to magazine axis 20 are provided, wherein at each tooth 44 a retaining element 46 is provided for releasably retaining packaging casing 14 on mandrel 26. Holding means 42 provide for every mandrel 26 one retaining element 46.

In Figs. 4a and 4b, one mandrel 26 with one packaging casing 14 is shown, wherein in Fig. 4a retaining element 46 is in a first position in which it releases free end 32 of mandrel 26 and wherein in Fig. 4b retaining element 46 is in second position in which the free end 32 of mandrel 26 is capped by retaining element 46. In second position, packaging casing 14 is secured by retaining element 46. In first position, packaging casing 14 can be removed from mandrel 26.

Retaining element 46 comprises a retaining surface 48 facing packaging casing 14. In second position, retaining surface 48 is substantially perpendicular to mandrel axis 27. Retaining element 46 is made of a material which is flexible, especially in a joint area. The retaining element 46 is formed by a flexible lip that is reversibly movable between the first position and the second position, wherein the retaining element 46 is arranged at holding means 42, in particular at a second plate 41, in such a way, that retaining element 46 urges by its own in the second position. Retaining element 46 comprises material that is suitable for a plurality of reversible deformations, like rubber or elastomers.

Mandrel carrier means 36 are rotatory moveable around magazine axis 20. Therefore, mandrel carrier means 36 comprise first driven means 50 to drive mandrel carrier means 36, in particular first plate 37, wherein first driven means 50 is arranged below first plate 37 opposite to mandrels 26. Due to the rotation of mandrel carrier means 36, in particular first plate 37, different packaging casing 14 can be positioned at a same picking-up position. Thus, packaging casing 14 can always be provided at the same picking position, so an operator and/or robot 22 can pick up packaging casing 14 easily, securely, and repeatedly.

Robot 22 comprises a basis 52 and three elements 54, each of which is movably coupled to each other for forming a robot arm. Mandrel carrier means 36, in particular first plate 37 and holding means 42, in particular second plate 41, are connected by a shaft 56 extending along magazine axis 20. Thus, a rotation of mandrel carrier means 36, in particular first plate 37, causes a similar rotation of holding means 42, in particular second plate 41, mandrels 26 and packaging casing 14 stored at mandrels 26.

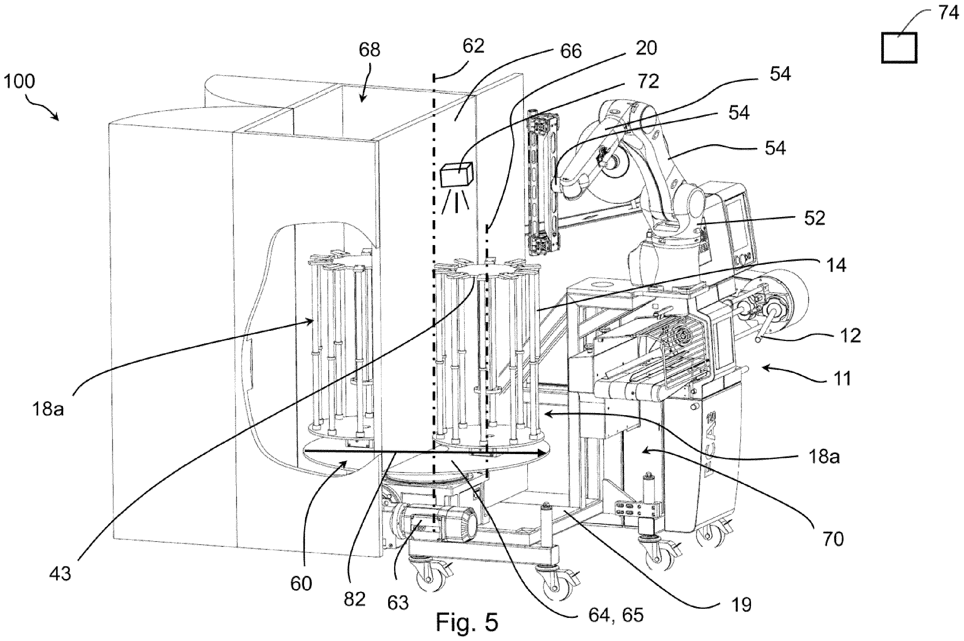

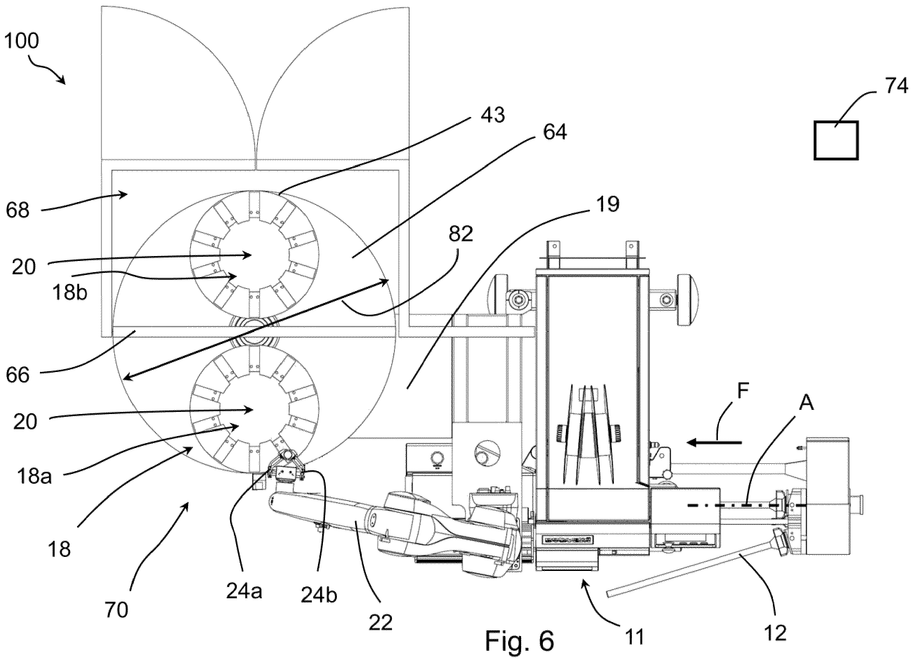

In order to provide a larger number of storage places for packaging casing 14, it is particularly advantageous to provide a revolver 60 comprising two magazines 18, according to the second embodiment of clipping machine 100 in Figs. 5 and 6. Revolver 60 has an revolver axis 62 and a revolver carrier means 64, in particular a third plate 65, extending perpendicular to revolver axis 62. Revolver carrier means 64, in particular third plate 65, is rotatable with regard to revolver axis 62. Preferably revolver carrier means 64 comprise second driven means 63 to rotate revolver carrier means 64, in particular third plate 65, wherein second driven means 63 are arranged below third plate 65. Both magazines 18 are arranged at revolver carrier means 64, preferably above third plate 65, wherein a rotatory movement of revolver carrier means 64, in particular third plate 65, causes a rotatory movement of both magazines 18 as well.

Preferably, revolver carrier means 64 have a first position in which a first magazine 18a is arranged in a delivery position and a second position in which a second magazine 18b is arranged in a feeding position, wherein the position of first magazine 18a and second magazine 18b are changeable by rotation of revolver carrier means 64 around revolver axis 62. In delivery position packaging casing 14 is picked up from mandrel 16 and in feeding position new packaging casing is arranged at an empty mandrel 16. Due to first position and second position and multiple magazines 18a, 18b, delivery and feeding of packaging casing 14 is possible simultaneously. The first position and the second position are configured in such a way, that that an operator or robot 22 at clipping machine 10 working at the first magazine 18a cannot reach the second magazine 18b and vice versa. Revolver 60 comprises a separating wall 66 for separating the first position from the second position. Separating wall 66 is arranged between first magazine 18a and second magazine 18b. Separating wall 66 is part of a secure zone 68, whereby secure zone 68 is spatially separated from a working area 70 of clipping machine 10. This ensures that robot 22 can work with provided packaging casing 14 at first magazine 18a in first position in working area 70, wherein at the same time a user or robot 22 can refill second magazine 18b with new packaging casings 14 in second position in secure zone 68. Separating wall 66 may be formed as a driven sliding door, wherein the sliding door opens when revolver carrier means 64, in particular third plate 65, rotates and closes when revolver carrier means 64, in particular third plate 65, does not move, or as a flexible film, wherein the flexible film yields to both magazine 18 when they switch their position.

To provide a packaging casing 14 stored on a mandrel 26, magazine 18b is positioned in second position in secure zone 68 by rotating revolver carrier means 64. An operator or a robot similar to robot 22 can insert new packaging casing 14 onto an empty mandrel 26. Mandrel 26 that is being loaded can always be in a feeding position. It is conceivable that the feeding position comprises more than one mandrel 26, in particular two or three mandrels 26.

After magazine 18b is loaded with new packaging casing 14 and all or a plurality of packaging casing 14 have been used from magazine 18a, revolver carrier means 64 is rotated in such a way that second magazine 18b is positioned in first position into working zone 70 and first magazine 18a is moved in second position into secure zone 68. Then, new packaging casing 14 can be picked from magazine 18b in working zone 70 and new packaging casing 14 can be stored on magazine 18a in secure zone 68.

Especially, to detect the state of a mandrel 26, whether a packaging casing 14 is loaded and/or to detect the position of magazine 18 and/or revolver 60 at least one sensor 72 is provided. Sensor 72 may be formed as a position sensor, a magnetic field sensor or a camera with image recognition. At least one sensor 72 may be arranged at mandrel carrier means 36, at mandrel 26, at retaining element 46, at holding means 42 and/or at revolver carrier means 64. Further, a control 74 is provided to machine the signals of sensor 72 and to control the position of revolver 60 and/or revolver carrier means 64 and/or magazines 18a, 18b by triggering first driven means 50 for moving mandrel carrier means 36 and/or by triggering second driven means 63 for moving revolver carrier means 64. Sensor 72 may check if a magazine 18, 18a, 18b has no more packaging casing 14. Sensor 72 sends signals to control 74, wherein control 74 controls magazines 18 and/or revolver 60 based on the signals of sensor 72.

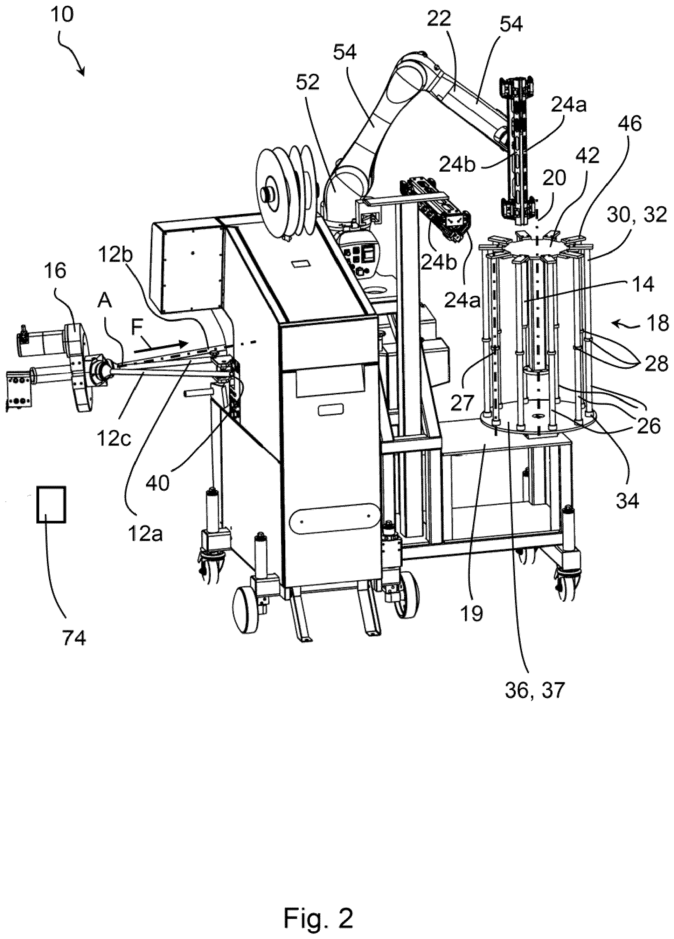

According to Figs. 1 and 2, mandrel carrier means 36, in particular first plate 37, comprises a first diameter 76 and holding means 42, in particular second plate 41, comprises a second diameter 78, wherein first diameter 76 is greater than second diameter 78. Circular ring also comprises a ring diameter 80, wherein first diameter 76 is greater than ring diameter 80 and/or ring diameter 80 is greater than second diameter 78. According to Figs. 5 and 6, revolver carrier means 64, in particular third plate 65, comprises a third diameter 82, wherein third diameter 82 is greater than first diameter 76 and/or greater than second diameter 78 and/or greater than ring diameter 80.

Filling tube assembly 16 arranged upstream clipping machine 10 includes two filling tubes 12. It has to be noted that filling tube assembly 16 may also include more than two filling tubes 12, like three or four filling tubes 12, in order to enable the production of sausage-shaped products with one filling tube 12 in the active position while refilling tubular-shaped packaging casing onto a further filling tube 12 arranged in an inactive position. However, it is also possible that filling tube arrangement 16 includes only one filling tube 12. In this case, for refilling tubular-shaped packaging casing onto the single filling tube, said filling tube 12 has to be brought from its active position into an inactive position, such that during refilling tubular-shaped packaging casing, production of sausage-shaped products is not possible.

Furthermore, in the shown embodiment of clipping machine 10, robot 22 is arranged in the region of the front side of clipping machine 10, such that the robot arm formed by robot elements 54, has to be moved across clipping machine 10. Alternatively, robot 22 may also be arranged at the rear side of clipping machine 10, such that robot 22 moves behind clipping machine 10, without affecting the space in front of clipping machine 10, where e.g. an operator may stay.

### List of reference signs (part of the description)

- 10, 100: clipping machine
- 11: clamping device
- 12: filling tube
- 14: packaging casing
- 16: filling tube assembly
- 18: magazine
- 19: table
- 20: magazine axis
- 22: robot
- 24a, 24b: left blade, right blade
- 26: mandrel
- 27: mandrel axis
- 28: support element
- 29: mandrel rod
- 30: first mandrel end
- 32: free end of mandrel
- 34: second mandrel end
- 36: mandrel carrier means
- 37: first plate
- 40: feeding opening of filling tube
- 41: second plate
- 42: holding means
- 43: outer circumference of second plate
- 44: teeth of second plate
- 46: retaining element
- 48: retaining surface
- 50: first driven means
- 52: robot basis
- 54: robot element
- 56: shaft
- 60: revolver
- 62: revolver axis
- 63: second driven means
- 64: revolver carrier means
- 65: third plate
- 66: separating wall
- 68: secure zone
- 70: working zone
- 72: sensor
- 74: control
- 76: first diameter of first plate
- 78: second diameter of second plate
- 80: ring diameter of circular ring
- 82: third diameter of third plate
- A: central axis
- F: filling direction

## Claims

1. A magazine (18) for providing at least one tubular-shaped packaging casing (14) suitable for receiving a flowable filling material in the production of sausage-shaped products, in particular sausages, comprising:
- a longitudinal magazine axis (20),
- at least one mandrel (26) for holding at least one packaging casing (14), wherein the at least one mandrel (26) has a longitudinal mandrel axis (27), which extends at least approximately parallel to the longitudinal magazine axis (20), and wherein the at least one mandrel (26) comprises a free end (32) at a first mandrel end (30), and
- at least one retaining element (46) arranged at least at the proximity of the first mandrel end (30) for releasably retaining the packaging casing (14) on the at least one mandrel (26), **characterised in that** the longitudinal magazine axis (20) is oriented at least approximately vertically.

2. The magazine (18) according to claim 1,
wherein the at least one retaining element (46) has at least one first section in which it releases the free end (32) of the at least one mandrel (26) and at least one second section in which the free end (32) of the at least one mandrel (26) is capped by the at least one retaining element (46).

3. The magazine (18) according to any of the preceding claims,
wherein the at least one retaining element (46) is made of a material which is elastic at least in sections.

4. The magazine (18) according to any of the preceding claims,
wherein the at least one mandrel (26) has a second mandrel end (34) spaced apart from the first mandrel end (30) along the longitudinal mandrel axis (27) and is attached to mandrel carrier means (36).

5. The magazine (18) according to claim 4,
wherein the mandrel carrier means (36) are rotatable around the longitudinal magazine axis (20).

6. The magazine (18) according to claim 4 or 5,
wherein the at least one retaining element (46) is held by holding means (42) coupled by a shaft (56) to the mandrel carrier means (36) for supporting the holding means (42) and transmitting forces from the mandrel carrier means (36) to the holding means (46).

7. The magazine (18) according to claim 6,
wherein the mandrel carrier means (36) have a first diameter (76) and the holding means (42) have a second diameter (78), and wherein the first diameter (76) is greater than the second diameter (78).

8. The magazine (18) according to any of claims 4 to 7,
wherein the at least one mandrel (26) is arranged at the mandrel carrier means (36) along a circular ring that is perpendicular to the magazine axis (20).

9. The magazine (18) according to claim 8,
wherein the circular ring has a ring diameter (80), and
wherein the first diameter (76) is greater than the ring diameter (80) and/or the ring diameter (80) is larger than the second diameter (78).

10. The magazine (18) according to any of preceding claims,
wherein the at least one mandrel (26) comprises at least one support element (28) for supporting the packaging casing (14), the at least one support element (28) is preferably reversibly adjustable in its position along the mandrel (26).

11. A revolver (60) comprising at least two magazines (18a, 18b) according to any of claims 1 to 10,
wherein the at least two magazines (18a, 18b) are arranged on revolver carrier means (64), which are rotatable around a revolver axis (62) extending at least approximately parallel to the longitudinal magazine axis (20).

12. The revolver (60) according to claim 11,
wherein the revolver carrier means (64) have at least a first position in which one magazine (18a) is arranged in a delivery position and at least a second position in which the further magazine (18b) is arranged in a feeding position.

13. The revolver according to claim 11 or 12,
further comprising at least one separating wall (66) for separating the first position from the second position.

14. A production machine (10, 100), in particular a clipping machine (10), for filling and closing a tubular or bag-shaped packaging casing (14) to produce sausage-shaped products, in particular sausages, comprising:
- at least one magazine (18) according to any of claims 1 to 10 and/or at least one revolver (60) according to any of claims 11 to 13, and
- a robot (22) to pick-up a packaging casing (14) provided at the magazine (18) and/or at the revolver (60) and to place it at a filling unit.

## Patentansprüche

1. Magazin (18) zur Bereitstellung wenigstens einer schlauchförmigen Verpackungshülle (14), die zum Aufnehmen eines fließfähigen Füllmaterials bei der Herstellung von wurstförmigen Produkten, insbesondere Würsten, geeignet ist, umfassend:
- eine Magazin-Längsachse (20),
- wenigstens einen Dorn (26) zum Halten wenigstens einer Verpackungshülle (14), wobei der wenigstens eine Dorn (26) eine Dorn-Längsachse (27) aufweist, die sich wenigstens annähernd parallel zur Magazin-Längsachse (20) erstreckt, und wobei der wenigstens eine Dorn (26) ein freies Ende (32) an einem ersten Dornende (30) aufweist, und
- wenigstens ein Halteelement (46), das wenigstens in der Nähe des ersten Dornendes (30) angeordnet ist, um die Verpackungshülle (14) lösbar auf dem wenigstens einen Dorn (26) zu halten,
**dadurch gekennzeichnet, dass** die Magazin-Längsachse (20) wenigstens annähernd vertikal ausgerichtet ist.

2. Magazin (18) nach Anspruch 1,
wobei das wenigstens eine Halteelement (46) wenigstens einen ersten Abschnitt aufweist, in dem es das freie Ende (32) des wenigstens einen Dorns (26) freigibt, und wenigstens einen zweiten Abschnitt, in dem das freie Ende (32) des wenigstens einen Dorns (26) durch das wenigstens eine Halteelement (46) abgedeckt ist.

3. Magazin (18) nach einem der vorangehenden Ansprüche,
wobei das wenigstens eine Halteelement (46) aus einem Material hergestellt ist, das wenigstens abschnittsweise elastisch ist.

4. Magazin (18) nach einem der vorangehenden Ansprüche,
wobei der wenigstens eine Dorn (26) ein zweites Dornende (34) aufweist, das von dem ersten Dornende (30) entlang der Dorn-Längsachse (27) beabstandet ist und an einer Dorn-Trägereinrichtung (36) befestigt ist.

5. Magazin (18) nach Anspruch 4,
wobei die Dorn-Trägereinrichtung (36) um die Magazin-Längsachse (20) drehbar ist.

6. Magazin (18) nach Anspruch 4 oder 5,
wobei das wenigstens eine Halteelement (46) von einer Halteeinrichtung (42) gehalten wird, die durch einen Schaft (56) mit der Dorn-Trägereinrichtung (36) gekoppelt ist, um die Halteeinrichtung (42) zu stützen und Kräfte von der Dorn-Trägereinrichtung (36) auf die Halteeinrichtung (46) zu übertragen.

7. Magazin (18) nach Anspruch 6,
wobei die Dorn-Trägereinrichtung (36) einen ersten Durchmesser (76) aufweist und die Halteeinrichtung (42) einen zweiten Durchmesser (78) aufweist, und wobei der erste Durchmesser (76) größer ist als der zweite Durchmesser (78).

8. Magazin (18) nach einem der Ansprüche 4 bis 7,
wobei der wenigstens eine Dorn (26) an der Dorn-Trägereinrichtung (36) entlang eines Kreisrings angeordnet ist, der senkrecht zur Magazinachse (20) angeordnet ist.

9. Magazin (18) nach Anspruch 8,
wobei der kreisförmige Ring einen Ringdurchmesser (80) aufweist, und wobei der erste Durchmesser (76) größer ist als der Ringdurchmesser (80) und/oder der Ringdurchmesser (80) größer ist als der zweite Durchmesser (78).

10. Magazin (18) nach einem der vorangehenden Ansprüche,
wobei der wenigstens eine Dorn (26) wenigstens ein Stützelement (28) zum Stützen der Verpackungshülle (14) umfasst, wobei das wenigstens eine Stützelement (28) vorzugsweise in seiner Position entlang des Dorns (26) reversibel einstellbar ist.

11. Revolver (60), umfassend wenigstens zwei Magazine (18a, 18b) nach einem der Ansprüche 1 bis 10,
wobei die wenigstens zwei Magazine (18a, 18b) auf Revolver-Trägereinrichtungen (64) angeordnet sind, die um eine zumindest annähernd parallel zur Magazin-Längsachse (20) verlaufende Revolverachse (62) drehbar sind.

12. Revolver (60) nach Anspruch 11,
wobei die Revolver-Trägereinrichtung (64) wenigstens eine erste Position, in der ein Magazin (18a) in einer Zuführposition angeordnet ist, und wenigstens eine zweite Position aufweist, in der das weitere Magazin (18b) in einer Zuführposition angeordnet ist.

13. Revolver (60) nach Anspruch 11 oder 12,
ferner wenigstens eine Trennwand (66) umfasst, um die erste Position von der zweiten Position zu trennen.

14. Produktionsmaschine (10, 100), insbesondere Clipmaschine (10), zum Füllen und Verschließen einer schlauch- oder beutelförmigen Verpackungshülle (14) zur Herstellung von wurstförmigen Produkten, insbesondere von Würsten, umfassend:
- wenigstens ein Magazin (18) nach einem der Ansprüche 1 bis 10 und/oder wenigstens einen Revolver (60) nach einem der Ansprüche 11 bis 13, und
- einen Roboter (22) zum Aufnehmen einer am Magazin (18) und/oder am Revolver (60) bereitgestellten Verpackungshülle (14) und zum Anordnen derselben an einer Abfülleinheit.

## Revendications

1. Chargeur (18) pour fournir au moins une enveloppe d'emballage tubulaire (14) adaptée afin de recevoir une matière de remplissage fluide dans la production de produits en forme de saucisses, en particulier de saucisses, comprenant :
- un axe de chargeur longitudinal (20),
- au moins un mandrin (26) pour maintenir au moins une enveloppe d'emballage (14), dans lequel ledit au moins un mandrin (26) possède un axe de mandrin longitudinal (27), qui s'étend au moins approximativement parallèlement à l'axe de chargeur longitudinal (20), et dans lequel ledit au moins un mandrin (26) comprend une extrémité libre (32) en une première extrémité de mandrin (30), et
- au moins une élément de retenue (46) disposé au moins à proximité de la première extrémité de mandrin (30) pour retenir de façon amovible l'enveloppe d'emballage (14) sur ledit au moins un mandrin (26), **caractérisé en ce que** l'axe de chargeur longitudinal (20) est orienté au moins approximativement à la verticale.

2. Chargeur (18) selon la revendication 1, dans lequel ledit au moins un élément de retenue (46) possède au moins une première section dans laquelle il libère l'extrémité libre (32) dudit au moins un mandrin (26) et au moins une deuxième section dans laquelle l'extrémité libre (32) dudit au moins un mandrin (26) est coiffée par ledit au moins un élément de retenue (46).

3. Chargeur (18) selon l'une quelconque des revendications précédentes, dans lequel ledit au moins un élément de retenue (46) est fabriqué en un matériau qui est élastique au moins par sections.

4. Chargeur (18) selon l'une quelconque des revendications précédentes, dans lequel ledit au moins un mandrin (26) possède une deuxième extrémité de mandrin (34) séparée de la première extrémité de mandrin (30) le long de l'axe de mandrin longitudinal (27) et est fixé à des moyens de support de mandrin (36).

5. Chargeur (18) selon la revendication 4, dans lequel les moyens de support de mandrin (36) sont rotatifs autour de l'axe de chargeur longitudinal (20).

6. Chargeur (18) selon la revendication 4 ou 5, dans lequel ledit au moins un élément de retenue (46) est maintenu par des moyens de maintien (42) couplés par un arbre (56) aux moyens de support de mandrin (36) pour soutenir les moyens de maintien (42) et transmettre des forces des moyens de support de mandrin (36) vers les moyens de maintien (46).

7. Chargeur (18) selon la revendication 6, dans lequel les moyens de support de mandrin (36) possèdent un premier diamètre (76) et les moyens de maintien (42) possèdent un deuxième diamètre (78), et dans lequel le premier diamètre (76) est supérieur au deuxième diamètre (78).

8. Chargeur (18) selon l'une quelconque des revendications 4 à 7, dans lequel ledit au moins un mandrin (26) est disposé sur les moyens de support de mandrin (36) le long d'un anneau circulaire perpendiculaire à l'axe de chargeur (20).

9. Chargeur (18) selon la revendication 8, dans lequel l'anneau circulaire possède un diamètre d'anneau (80), et dans lequel le premier diamètre (76) est supérieur au diamètre d'anneau (80) et/ou le diamètre d'anneau (80) est plus grand que le deuxième diamètre (78).

10. Chargeur (18) selon l'une quelconque des revendications précédentes, dans lequel ledit au moins un mandrin (26) comprend au moins un élément de soutien (28) pour soutenir l'enveloppe d'emballage (14), ledit au moins un élément de soutien (28) est de préférence ajustable de manière réversible dans sa position le long du mandrin (26).

11. Plateau tournant (60) comprenant au moins deux chargeurs (18a, 18b) selon l'une quelconque des revendications 1 à 10, dans lequel lesdits au moins deux chargeurs (18a, 18b) sont disposés sur des moyens de support de plateau tournant (64), lesquels sont rotatifs autour d'un axe de plateau tournant (62) s'étendant au moins approximativement parallèlement à l'axe de chargeur longitudinal (20).

12. Plateau tournant (60) selon la revendication 11, dans lequel les moyens de support de plateau tournant (64) possèdent au moins une première position dans laquelle un chargeur (18a) est disposé dans une position de fourniture et au moins une deuxième position dans laquelle l'autre chargeur (18b) est disposé dans une position d'alimentation.

13. Plateau tournant selon la revendication 11 ou 12, comprenant en outre au moins une paroi de séparation (66) pour séparer la première position de la deuxième position.

14. Machine de production (10, 100), en particulier machine d'agrafage (10), pour remplir et fermer une enveloppe d'emballage tubulaire ou en forme de sac (14) afin de produire des produits en forme de saucisses, en particulier des saucisses, comprenant :
- au moins un chargeur (18) selon l'une quelconque des revendications 1 à 10 et/ou au moins un plateau tournant (60) selon l'une quelconque des revendications 11 à 13, et
- un robot (22) pour prendre une enveloppe d'emballage (14) fournie au niveau du chargeur (18) et/ou au niveau du plateau tournant (60) et de la placer au niveau d'une unité de remplissage.
